# EUROPEAN PATENT APPLICATION

(11) **EP 3 699 848 A1**
(43) Date of publication of application: **26.08.2020**
(21) Application number: 19159181.7
(22) Date of filing: 25.02.2019
(51) Int. Cl.: G06Q 20/02, G06Q 50/10

(54) **BLOCKCHAIN-POWERED DEVICE INSTRUCTION**

(71) Applicant: Siemens Aktiengesellschaft, 80333 München (DE)
(72) Inventor: Katrych, Sergii, 81737 München (DE); Radulescu Kobler, Mihai, 5122 Ach (AT); Sturm, Monika, 1190 Wien (AT); Thurau, Oliver, 67117 Limburgerhof (DE)

(57) **Abstract**

The invention relates to a computer implemented method for instructing a device using a blockchain or distributed ledger system comprising a plurality of interlinked blocks. The method comprises the steps of defining and deploying a smart contract comprising at least a business logic in the blocks; sending, by a first agent between the device and the blockchain or distributed ledger system, information comprising at least a function of the device to the blockchain or distributed ledger system; storing the function of the device into the blocks; searching, by a second agent between an actor and the blockchain or distributed ledger system, the function of the device in the blocks; informing, by the blockchain or distributed ledger system, the second agent of the device or the function of the device; requesting, by the second agent, the execution of the function of the device; and executing the function of the device.

## Description

The invention relates to a computer implemented method, a system, a computer program and a computer-readable medium for instructing a device.

There exists a need for instructing a device to perform its functionality, not only in daily life, but also in the working environments. For instance, a user may need to heat up an oven which he may not be able to reach; a driver of a car may wish to gain the access at the entrance to car parks, service yards and/or restricted areas where car park barriers control this access; a driver of an electric car may wish to start or stop the charging process at an electric vehicle charging station.

One of the approaches for instructing a device makes use of publish-subscribe patterns which may be implemented in an enterprise environment where various subsystems co-exist as a part of a larger heterogeneous system.

The publish-subscribe patterns are based among others on a concept of "topic" and "queue". Publishers do not program the messages to be sent directly to specific subscribers, but instead categorize published messages into classes, i.e. topics, without knowledge of which subscribers, if any, there may be. Similarly, subscribers express interest in one or more topics and only receive messages that are of interest, without knowledge of which publishers, if any, there are. If there are no interested subscribers available at the time a single message of a certain topic is published, this message will be kept until a subscriber is available that can process the message. Multiple published messages may also be prioritized in a queue before being sent to the corresponding subscribers.

A typical publish-subscribe pattern uses a so-called "intermediary message broker" ("broker" for short) as a central element for forwarding/routing the published messages from publishers to subscribers and for prioritizing and temporally storing the published messages before routing them.

Although the publishers and the subscribers are decoupled from each other, the existence of the broker acting as a middle-man may lead to e.g. a "single point of failure". This means, if the broker fails, it will stop the entire system from working. In this regard, the broker as a central element contradicts the nature of an enterprise environment where a decentralized system is required.

Approaches based on "service discovery" have also been suggested for instructing a device. Service discovery is the automatic detection of devices and services offered by these devices on a computer network. However, in order to execute an offered service, a client of the service has to know firstly the (remote) application programming interface ("API") related to the exposed offered service.

Accordingly, it is an object of the present invention to overcome the drawbacks of the above-mentioned approaches in order to provide an improved way for instructing a device.

This object is inventively achieved by the independent claims. Advantageous further developments may be taken from the dependent claims.

The invention provides, according to a first aspect, a computer implemented method for instructing a device using a blockchain or distributed ledger system comprising a plurality of interlinked blocks. This method comprises the steps of defining and deploying a smart contract comprising at least a business logic in the blocks; sending, by a first agent between the device and the blockchain or distributed ledger system, information comprising at least a function of the device to the blockchain or distributed ledger system; storing the function of the device into the blocks; searching, by a second agent between an actor and the blockchain or distributed ledger system, the function of the device in the blocks; informing, by the blockchain or distributed ledger system, the second agent of the device or the function of the device; requesting, by the second agent, the execution of the function of the device; and executing the function of the device.

The technology of blockchain or "distributed ledger" can be realized, in particular, as a distributed database system.

The blockchain is a growing list of records, called blocks or data blocks, which are linked using cryptography. Each data block contains, for instance, a cryptographic hash of the previous data block in the blockchain, a timestamp, and transaction data. By the design of the blockchain, a blockchain is resistant to modification of the transaction data. The blockchain is an open, distributed ledger that can record transactions between, for instance, two parties efficiently and in a verifiable and permanent way. Transactions data once recorded in any given data block cannot be deleted or altered retroactively without alteration of all subsequent blocks, which requires consensus of the network majority. Because of this, subsequent transactions are built on previous transactions and confirm these as correct by proving knowledge of the previous transactions. This makes it impossible to manipulate or erase the existence or content of previous transactions without destroying all subsequent transactions at the same time. Although blockchain records are not unalterable, blockchains are considered secure by design.

In addition to applications of blockchains for decentralized payment systems (e.g. Bitcoin), new applications are being developed in the financial industry. In particular, transactions between companies can be realized without an intermediary or clearing house, protected against manipulation. This enables new business models without a trustworthy arbiter, reduces transaction costs, and new digital services can be offered flexibly without having to set up a special infrastructure and trusted relationships. A transaction record or transaction protected by a blockchain includes program code, for instance, which can also be referred to as a "smart contract".

In almost every smart contract in a blockchain system, for example based on Ethereum blockchain, business logics and rules are defined under which the parties to that smart contract agree to interact with each other. The codes contained in the smart contract facilitate, verify and enforce the negotiation or performance of an agreement or a transaction.

It is particularly advantageous that with the help of the inventive computer implemented method, a decentralized system based on the technology of blockchain or distributed ledger (also designated as a "blockchain/distributed ledger") for instructing a device is realized. Due to the nature of blockchain, data regarding the smart contract for instructing a device and the execution result thereof etc. are stored incorruptibly in the interlinked blocks, rather than relying on a central authority to securely transact with the device to be instructed and with the actor which desires to instruct the device. Thereby, a single point of failure is avoided.

Furthermore, with the help of the inventive computer implemented method, the development speed of methods/solutions for instructing other devices can be considerably increased because the focus of development is on those specific devices or on the functionality of those specific devices, but not necessarily on the smart contract.

A smart contract may be defined (and deployed in a blockchain system) by an authority and can be influenced neither by the first agent (for the device) nor by the second agent (for the actor). The business logics may be defined generically in the smart contract, and may thus correspond to and/or apply to various devices (functionality) and/or actors. In this respect, a single smart contract may be able to manage the instruction of different types of devices with different functions as well as manage different type of actors which plans to instruct these devices. Thus, specific solutions for each of these devices and actors are inventively avoided which leads to a high development speed of solutions to instructing devices.

Correspondingly, the maintenance of such a system is also improved. Upgrade and re-deployment of the specific solutions for each of these devices and actors are inventively avoided. The relevant authority may only need to upgrade or re-deploy the single smart contract managing the instruction of these devices in the blockchain.

As a result, the costs on the development and the maintenance are also significantly reduced.

In a preferable embodiment, the method further comprises the step of deciding, by the blockchain or distributed ledger system according to the business logic of the smart contract, whether the information comprising at least a function of the device is to be stored in the blocks or not.

The business logic of the smart contract may define the types of functions and/or types of devices which can be published, stored, and/or broadcasted in the blockchain. If e.g. the smart contract aims only at functionality of various car park barriers, information sent by an agent regarding functionality of an oven will be not handled by the blockchain or distributed ledger system.

In a further preferable embodiment, the method further comprises the step of deciding, by the blockchain or distributed ledger system according to the business logic of the smart contract, whether the second agent is to be informed of the device or the function of the device or not.

The business logic of the smart contract may define the lowest time interval between two executions of the device function carried out subsequently. If the second agent inquires with the blockchain or distributed ledger system regarding the functionality of a device at a certain location right after the execution thereof, e.g. only one second later after the execution thereof, the blockchain or distributed ledger system may refuse to inform the second agent of the device or the function of the device or not.

In a further preferable embodiment, the method further comprises the step of deciding, by the blockchain or distributed ledger system according to the business logic of the smart contract, whether the request for the execution of the function of the device is permitted or not.

The business logic of the smart contract may define the types of actors which are allowed to instruct the related devices. For instance, if an actor is a smart phone the MAC address of which is not in a pre-defined list of the smart contract, the request from the actor for the execution of the function of the device to be instructed will not be permitted by the blockchain or distributed ledger system.

In a further preferable embodiment, the method further comprises the steps of generating, by the first agent, a response message upon the execution of the function of the device; and sending the response message to the blockchain or distributed ledger system. Thereby, the blockchain or distributed ledger system is informed about the execution.

In a further preferable embodiment, the method further comprises the steps of validating, by the blockchain or distributed ledger system according to the business logic of the smart contract, the response message; and storing the response message into the blocks.

The business logic of the smart contract may define the conditions under which a response message is valid and thus corresponds to a valid execution of the device. If e.g. the opening of a car park barrier exceeds a time limit pre-defined in the smart contract, e.g. this was carried out three hours later after the permission of the execution request, the blockchain or distributed ledger system will treat the corresponding response message as invalid and will not store this response message into the blocks.

In a further preferable embodiment, the method comprises further the step of informing, by the blockchain or distributed ledger system according to the business logic of the smart contract, the first and/or the second agent of the validated response message. Thereby, a successful execution of the device functionality acknowledged by the blockchain or distributed ledger system is not only derivable from the blockchain, but also learned by the device and the actor which may then use this information for further purpose.

In a further preferable embodiment, the information comprising at least a function of the device comprises hash values / hash codes as a result of a hash function mapping at least a function of the device.

The data regarding the function of the device may be stored outside the blockchain. These data are processed by a hash function that may map data of arbitrary size to data of a fixed size, and the hash values / hash codes as the values returned by this hash function are sent to the blockchain or distributed ledger system. It is deliberately difficult for a third party to reconstruct these data by only knowing the stored hash value. In contrast, given a search key or primary key in addition to the hash value, a party may quickly locate this data record. Thereby, the data regarding the function of the device are inventively secured.

In a further preferable embodiment, the business logic of the smart contract is defined for a plurality of units comprising the device. Thereby, a generic smart contract which applies to a plurality of devices to be instructed is realized.

In a further preferable embodiment, the method further comprises the step of storing information regarding the search of the function of the device and/or the request for the execution of the function of the device into the blocks. Thereby, this information may be utilized to improve the behavior of the first and/or second agent.

The invention further provides, according to a second aspect, a system for instructing a device comprising a blockchain or distributed ledger subsystem which comprises a plurality of interlinked blocks, a first agent between the device and the blockchain or distributed ledger subsystem and a second agent between an actor and the blockchain or distributed ledger subsystem. A smart contract comprising at least a business logic is definable and deployable in the blocks. The first agent is configured to send information comprising at least a function of the device to the blockchain or distributed ledger subsystem. The blockchain or distributed ledger subsystem is configured to store the function of the device into the blocks. The second agent is configured to search the function of the device in the blocks. The blockchain or distributed ledger subsystem is further configured to inform the second agent of the device or the function of the device. The second agent is further configured to request the execution of the function of the device. The first agent is further configured to execute the function of the device.

In a preferable embodiment of the system, the blockchain or distributed ledger subsystem is further configured to decide, according to the business logic of the smart contract, whether the information comprising at least a function of the device is to be stored in the blocks or not.

In a further preferable embodiment of the system, the blockchain or distributed ledger subsystem is further configured to decide, according to the business logic of the smart contract, whether the second agent is to be informed of the device or the function of the device or not, and/or, the blockchain / distributed ledger subsystem is further configured to decide, according to the business logic of the smart contract, whether the request for the execution of the function of the device is permitted or not.

The invention further provides, according to a third aspect, a computer program comprising instructions which, when the program is executed by a computer, cause the computer to carry out the method according to the first aspect.

These instructions may define all of the steps of the inventive method as "resources" each of which is identifiable with a Uniform Resource Identifier ("URI") which is a string of characters that unambiguously identifies a particular resource. A request for a resource URI by means of e.g. the request method "GET" of the Hypertext Transfer Protocol ("HTTP") will return the corresponding resource which is immutable. If the content of a resource changes, the URI thereof changes correspondingly. For example, the metadata of the functionality of a certain device have its own URI. A "GET" call to this URI returns the representation of its functionality.

The device to be instructed needs to provide a set of metadata which describe its functionality. A functionality metadata model may provide at least a URI and a function name per function. In addition, the functionality metadata model may comprise further the following properties per function: a set of arguments of type "Parameter", a set of results of type "Parameter" and "Callback"/"Hook".

Each "Parameter" may have at least the following properties: the data type of the parameter value, the name of the parameter in the context of functionality and the parameter value which may be in its serialized form, i.e., the parameter value has been translated into a format that can be stored (for example, in a file or memory buffer) or transmitted (for example, across a network connection link) and reconstructed later. The "Parameter" is considered as a scalar which does not have an URI. The "Callback"/"Hook" allows to define an interaction regarding functionality which can be defined as a resource.

Furthermore, following "events" (which are actions or occurrences recognized by software) may be also involved: "Query Functionality" - searching for a given functionality and if this is found, it acts on the result; "Execute Function Request" - indicating that a certain actor plans to execute a certain function, which, however, does not imply at all that the function is already triggered; and "OnExecute Function Response" - acknowledging a function execution and transporting the result of an "Execute Function Request" back to the actor.

The invention further provides, according to a fourth aspect, a computer-readable medium comprising instructions which, when executed by a computer, cause the computer to carry out the method according to the first aspect.

In the present invention, an agent is a piece of software or a unit comprising a piece of software which serves as an interface between the blockchain or distributed ledger (sub)system and the device/actor.

Further advantageous details and features may be taken from the following description of several exemplary embodiments of the invention in conjunction with the drawings, in which:
- Fig. 1: shows a block diagram of an embodiment of the inventive computer implemented method for instructing a device;
- Fig. 2: shows a schematic representation of an embodiment of the inventive system for instructing a device;
- Fig. 3: shows schematically an application scenario of the another embodiment of the inventive computer implemented method and another embodiment of the inventive system;
- Fig. 4: shows a block diagram of an embodiment of the inventive computer program; and
- Fig. 5: shows a block diagram of an embodiment of the inventive computer-readable medium.

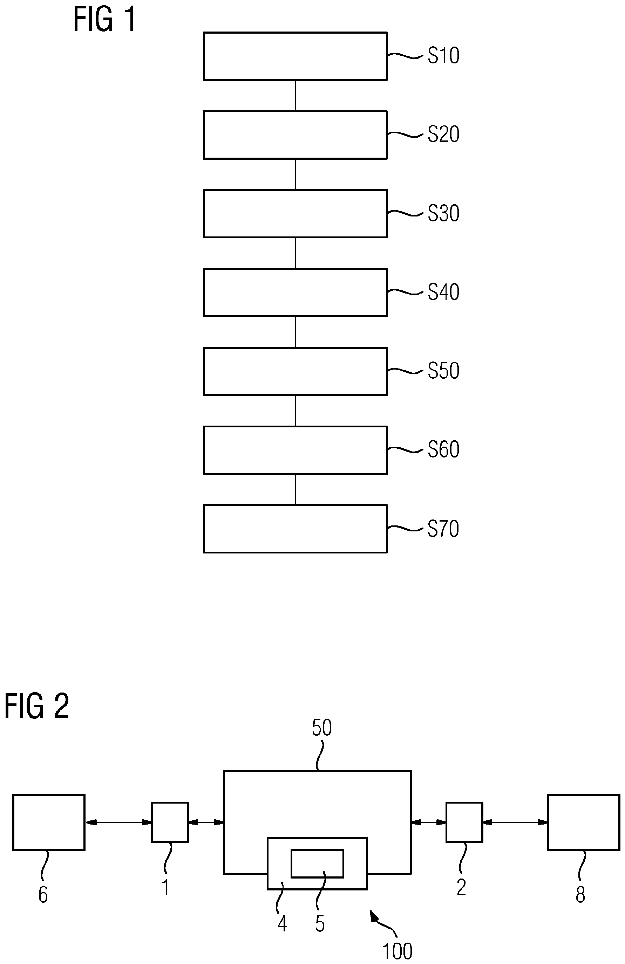

The embodiment of the inventive computer implemented method for instructing a device using a blockchain or distributed ledger system comprising a plurality of interlinked blocks shown in Fig. 1 comprises seven steps S10, S20, S30, S40, S50, S60, S70.

In the step S10, a smart contract comprising at least a business logic is defined and deployed in the blocks. In the step S20, information comprising at least a function of the device is sent to the blockchain or distributed ledger system by a first agent between the device and the blockchain or distributed ledger system. In the step S30, the function of the device is stored into the blocks. In the step S40, the function of the device is searched in the blocks by a second agent between an actor and the blockchain or distributed ledger system. In the step S50, the second agent is informed of the device or the function of the device by the blockchain or distributed ledger system. In the step S60, the execution of the function of the device 6 is requested by the second agent. In the step S70, the function of the device is executed.

The embodiment of the inventive system for instructing a device shown in Fig. 2 comprises a blockchain or distributed ledger subsystem 100 which comprises a blockchain 50 consisting of a plurality of interlinked blocks (not shown in Fig. 2), a first agent 1 between the device 6 and the blockchain or distributed ledger subsystem 100 and a second agent 2 between an actor 8 and the blockchain or distributed ledger subsystem 100.

A smart contract 4 comprising at least a business logic 5 is definable and deployable in the blocks. The first agent 1 is configured to send information comprising at least a function of the device 6 to the blockchain or distributed ledger subsystem 100. The blockchain or distributed ledger subsystem 100 is configured to store the function of the device into the blocks. The second agent 2 is configured to search the function of the device 6 in the blocks. The blockchain or distributed ledger subsystem 100 is further configured to inform the second agent 2 of the device 6 or the function of the device 6. The second agent 2 is further configured to request the execution of the function of the device 6. The first agent 1 is further configured to execute the function of the device 6.

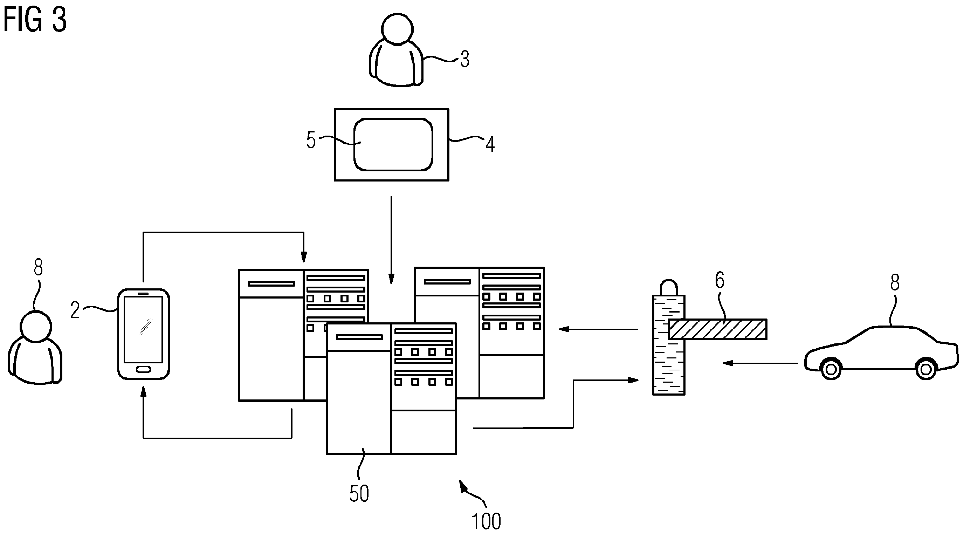

In the application scenario shown in Fig. 3, a car 8 (as an actor 8) approaches a car park barrier and would like to gain the access at the entrance to a car park. An authority 3 such as a company which owns this car park has already defined and deployed a smart contract 4 comprising at least a park barrier business logic 5 to the blockchain 50 of the blockchain or distributed ledger subsystem 100. The park barrier 6 has sent its functionality (i.e. open or close) via a first agent (not shown in Fig. 3) to the blockchain or distributed ledger subsystem 100. The blockchain or distributed ledger subsystem 100 has also decided, according to the business logic 5 declared in the smart contract 4, that the information regarding the functionality of the park barrier 6 can be stored in the blocks of the blockchain 50.

The driver of the car 8 searches via a second agent 2 in the blockchain 50 for a function regarding opening a barrier at the location of the car 8. According to the park barrier business logic 5 defined in the smart contract 4, the blockchain or distributed ledger subsystem 100 indicates via the second agent 2 to the driver 8 the functionality of the park barrier 6.

The driver 8 requests via the second agent 2 for triggering the function "open" of the park barrier 6. The blockchain or distributed ledger subsystem 100 validates successfully this request against the business logic 5 defined in the smart contract 4 and then triggers the function "open" of the park barrier 6 via the first agent. Afterwards, the first agent 1 accesses the functionality of the park barrier 6 and executes the function "open". The car 8 may then pass the open park barrier 6.

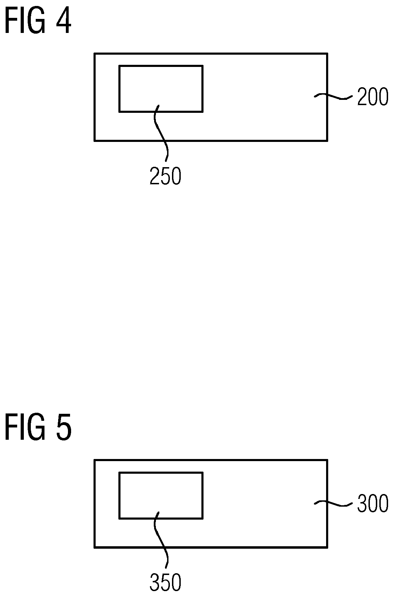

The embodiment of the inventive computer program 200 shown in Fig. 4 comprises instructions 250 which, when the program 200 is executed by a computer, cause the computer to carry out the embodiment of the inventive method shown in Fig. 1.

The embodiment of the inventive computer-readable medium 300 shown in Fig. 5 comprises instructions 350 which, when executed by a computer, cause the computer to carry out the embodiment of the inventive method shown in Fig. 1.

The invention is described and illustrated in detail by the preferable embodiments mentioned above. However, the invention is not limited by the disclosed examples, and other variations can be derived therefrom while still being inside the protection scope of the invention. For instance, although it is described above that a first agent is provided for a device, it is possible that several agents are provided for each of the functions of a device having a plurality of functions, respectively.

## Claims

1. A computer implemented method for instructing a device (6) using a blockchain or distributed ledger system (100) comprising a plurality of interlinked blocks, comprising the steps of:
defining and deploying (S10) a smart contract comprising at least a business logic in the blocks (50);
sending (S20), by a first agent (1) between the device (6) and the blockchain or distributed ledger system (100), information comprising at least a function of the device (6) to the blockchain or distributed ledger system (100);
storing (S30) the function of the device (6) into the blocks;
searching (S40), by a second agent (2) between an actor and the blockchain or distributed ledger system (100), the function of the device (6) in the blocks (50);
informing (S50), by the blockchain or distributed ledger system (100), the second agent (2) of the device (6) or the function of the device (6);
requesting (S60), by the second agent (2), the execution of the function of the device (6); and
executing (S70) the function of the device (6).

2. The method according to claim 1, further comprising the step of:
deciding, by the blockchain or distributed ledger system (100) according to the business logic (5) of the smart contract (4), whether the information comprising at least a function of the device (6) is to be stored in the blocks (50) or not.

3. The method according to claim 1 or 2, further comprising the step of:
deciding, by the blockchain or distributed ledger system (100) according to the business logic (5) of the smart contract (4), whether the second agent (2) is to be informed of the device (6) or the function of the device (6) or not.

4. The method according to any of the preceding claims, further comprising the step of:
deciding, by the blockchain or distributed ledger system (100) according to the business logic (5) of the smart contract (4), whether the request for the execution of the function of the device (6) is permitted or not.

5. The method according to any of the preceding claims, further comprising the steps of:
generating, by the first agent (1), a response message upon the execution of the function of the device (6); and
sending the response message to the blockchain or distributed ledger system (100).

6. The method according to claim 5, comprising the steps of: validating, by the blockchain or distributed ledger system (100) according to the business logic (5) of the smart contract (4), the response message; and
storing the response message into the blocks (50).

7. The method according to claim 6, comprising the step of: informing, by the blockchain or distributed ledger system (100) according to the business logic (5) of the smart contract (4), the first and/or the second agent (1, 2) of the validated response message.

8. The method according to any of the preceding claims, wherein the information comprising at least a function of the device (6) comprises hash values or hash codes as a result of a hash function mapping at least a function of the device (6) .

9. The method according to any of the preceding claims, wherein the business logic (5) of the smart contract (4) is defined for a plurality of units comprising the device (6).

10. The method according to any of the preceding claims, comprising the step of:
storing information regarding the search of the function of the device (6) and/or the request for the execution of the function of the device (6) into the blocks (50).

11. A system for instructing a device (6) comprising a blockchain or distributed ledger subsystem (100) which comprises a plurality of interlinked blocks, a first agent (1) between the device (6) and the blockchain or distributed ledger subsystem (100) and a second agent (2) between an actor (8) and the blockchain or distributed ledger subsystem (100), wherein a smart contract (4) comprising at least a business logic (5) is definable and deployable in the blocks,
wherein the first agent (1) is configured to send information comprising at least a function of the device (6) to the blockchain or distributed ledger subsystem (100),
wherein the blockchain or distributed ledger subsystem (100) is configured to store the function of the device (6) into the blocks (50),
wherein the second agent (2) is configured to search the function of the device (6) in the blocks,
wherein the blockchain or distributed ledger subsystem (100) is further configured to inform the second agent (2) of the device (6) or the function of the device (6),
wherein the second agent (2) is further configured to request the execution of the function of the device (6), and
wherein the first agent (1) is further configured to execute the function of the device (6).

12. The system according to claim 11, wherein the blockchain / distributed ledger subsystem (100) is further configured to decide, according to the business logic (5) of the smart contract (4), whether the information comprising at least a function of the device (6) is to be stored in the blocks or not.

13. The system according to claim 11 or 12, wherein the blockchain or distributed ledger subsystem (100) is further configured to decide, according to the business logic (5) of the smart contract (4), whether the second agent (2) is to be informed of the device (6) or the function of the device (6) or not, and/or
wherein the blockchain or distributed ledger subsystem (100) is further configured to decide, according to the business logic (5) of the smart contract (4), whether the request for the execution of the function of the device (6) is permitted or not.

14. A computer program (200) comprising instructions (250) which, when the program is executed by a computer, cause the computer to carry out the method of any one of claims 1 to 10.

15. A computer-readable medium (300) comprising instructions (350) which, when executed by a computer, cause the computer to carry out the method of any one of claims 1 to 10.

## Amended claims

### Amended claims in accordance with Rule 137(2) EPC.

1. A computer implemented method for instructing a device (6) using a blockchain or distributed ledger system (100) comprising a plurality of interlinked blocks, comprising the steps of:
defining and deploying (S10) a smart contract comprising at least a business logic in the blocks (50);
sending (S20), by a first agent (1) between the device (6) and the blockchain or distributed ledger system (100), information comprising at least a function of the device (6) to the blockchain or distributed ledger system (100);
storing (S30) the function of the device (6) into the blocks;
searching (S40), by a second agent (2) between an actor and the blockchain or distributed ledger system (100), the function of the device (6) in the blocks (50);
informing (S50), by the blockchain or distributed ledger system (100), the second agent (2) of the device (6) or the function of the device (6);
requesting (S60), by the second agent (2), the execution of the function of the device (6); and
executing (S70) the function of the device (6),
wherein each of the first agent (1) and the second agent (2) is a unit comprising a piece of software which serves as an interface between the blockchain or distributed ledger system (100) and the device (6) or the actor.

2. The method according to claim 1, further comprising the step of:
deciding, by the blockchain or distributed ledger system (100) according to the business logic (5) of the smart contract (4), whether the information comprising at least a function of the device (6) is to be stored in the blocks (50) or not.

3. The method according to claim 1 or 2, further comprising the step of:
deciding, by the blockchain or distributed ledger system (100) according to the business logic (5) of the smart contract (4), whether the second agent (2) is to be informed of the device (6) or the function of the device (6) or not.

4. The method according to any of the preceding claims, further comprising the step of:
deciding, by the blockchain or distributed ledger system (100) according to the business logic (5) of the smart contract (4), whether the request for the execution of the function of the device (6) is permitted or not.

5. The method according to any of the preceding claims, further comprising the steps of:
generating, by the first agent (1), a response message upon the execution of the function of the device (6); and
sending the response message to the blockchain or distributed ledger system (100).

6. The method according to claim 5, comprising the steps of: validating, by the blockchain or distributed ledger system (100) according to the business logic (5) of the smart contract (4), the response message; and
storing the response message into the blocks (50).

7. The method according to claim 6, comprising the step of: informing, by the blockchain or distributed ledger system (100) according to the business logic (5) of the smart contract (4), the first and/or the second agent (1, 2) of the validated response message.

8. The method according to any of the preceding claims, wherein the information comprising at least a function of the device (6) comprises hash values or hash codes as a result of a hash function mapping at least a function of the device (6) .

9. The method according to any of the preceding claims, wherein the business logic (5) of the smart contract (4) is defined for a plurality of units comprising the device (6).

10. The method according to any of the preceding claims, comprising the step of:
storing information regarding the search of the function of the device (6) and/or the request for the execution of the function of the device (6) into the blocks (50).

11. A system for instructing a device (6) comprising a blockchain or distributed ledger subsystem (100) which comprises a plurality of interlinked blocks, a first agent (1) between the device (6) and the blockchain or distributed ledger subsystem (100) and a second agent (2) between an actor (8) and the blockchain or distributed ledger subsystem (100),
wherein a smart contract (4) comprising at least a business logic (5) is definable and deployable in the blocks,
wherein the first agent (1) is configured to send information comprising at least a function of the device (6) to the blockchain or distributed ledger subsystem (100),
wherein the blockchain or distributed ledger subsystem (100) is configured to store the function of the device (6) into the blocks (50),
wherein the second agent (2) is configured to search the function of the device (6) in the blocks,
wherein the blockchain or distributed ledger subsystem (100) is further configured to inform the second agent (2) of the device (6) or the function of the device (6),
wherein the second agent (2) is further configured to request the execution of the function of the device (6),
wherein the first agent (1) is further configured to execute the function of the device (6), and
wherein each of the first agent (1) and the second agent (2) is a unit comprising a piece of software which serves as an interface between the blockchain or distributed ledger system (100) and the device (6) or the actor (8).

12. The system according to claim 11, wherein the blockchain / distributed ledger subsystem (100) is further configured to decide, according to the business logic (5) of the smart contract (4), whether the information comprising at least a function of the device (6) is to be stored in the blocks or not.

13. The system according to claim 11 or 12, wherein the blockchain or distributed ledger subsystem (100) is further configured to decide, according to the business logic (5) of the smart contract (4), whether the second agent (2) is to be informed of the device (6) or the function of the device (6) or not, and/or
wherein the blockchain or distributed ledger subsystem (100) is further configured to decide, according to the business logic (5) of the smart contract (4), whether the request for the execution of the function of the device (6) is permitted or not.

14. A computer program (200) comprising instructions (250) which, when the program is executed by a computer, cause the computer to carry out the method of any one of claims 1 to 10.

15. A computer-readable medium (300) comprising instructions (350) which, when executed by a computer, cause the computer to carry out the method of any one of claims 1 to 10.
